# EUROPEAN PATENT APPLICATION

(11) **EP 4 691 673 A1**
(43) Date of publication of application: **11.02.2026**
(21) Application number: 25192981.6
(22) Date of filing: 31.07.2025
(51) Int. Cl.: B23B 51/00, B23B 51/02

(54) **DRILLING TOOL**

(30) Priority: 05.08.2024 JP 2024128852
(71) Applicant: Tungaloy Corporation, Iwaki-shi Fukushima 970-1144 (JP)
(72) Inventor: KOMATSU, Naoki, Fukushima, 9701144 (JP)
(74) Representative: Vossius & Partner Patentanwälte Rechtsanwälte mbB

(57) **Abstract**

Tool (1) for drilling, the tool comprising two or more cutting edges (12) and a web thinning (20), in which a thinning heel surface (20H) facing backward in a rotating direction of the tool is formed by a convex surface, and in which a thinning angle (τ) gradually becomes smaller from a leading end of the tool toward a base end thereof. A thinning rake surface (20R) of the web thinning may be shaped straight so as to extend from an area around a center (1c) of the tool and in a radial direction or a parallel direction thereto in a tool front view. A thinning rake surface may be shaped in a helix in an opposite direction to the rotating direction of the tool so as to extend from an area around a center of the tool and in a radial direction in a tool front view.

## Description

### Background

### Field

The present invention relates to a drilling tool.

### Description of Related Art

The shape, length, etc. of a thinning heel surface in a drill, being an example of a drilling tool, are important factors in determining the size of a chip (see, for example, WO2019/176452). In this regard, there are many conventional drills which each involve a large thinning angle in order to strongly restrain and separate chips into small pieces and thereby improve the discharging efficiency for the chips (see, for example, JP2023-068305 A and WO2019/031737).

### Summary

However, when a conventional drill as described above is used to machine a workpiece, such as stainless steel, where chips are likely to be extended, the effect of separating chips into small pieces is often insufficient; on the contrary, a large thinning angle will block the discharging of chips. This leads to a long time during which chips remain near cutting edges, and this may cause chip welding to occur.

Under the above circumstances, an object of the present invention is to provide a drilling tool capable of satisfactorily discharging chips particularly when machining is performed on a workpiece, such as stainless steel, where chips are likely to be extended.

An aspect of the present invention provides a tool for drilling, the tool comprising two or more cutting edges and a web thinning, in which a thinning heel surface facing backward in a rotating direction of the tool is formed by a convex surface, and in which a thinning angle gradually becomes smaller from a leading end of the tool toward a base end thereof.

Regarding such drilling tool in which the thinning heel surface is constituted by the convex surface whose thinning angle becomes more acute as it heads to a base end of the tool, this drilling tool easily exerts the function of facilitating the discharging of chips by appropriately curling the chips in an area around a thinning cutting edge located on a leading end side of the tool while also smoothly guiding the chips through a curved surface whose angle becomes more acute as it heads to a base end of the tool rather than exerting the function of separating chips into small pieces. Such drilling tool shortens a time during which chips remain near the cutting edges, easily suppresses the transfer of cutting heat from chips to the edges, and easily suppresses the welding of chips to the cutting edges, and in turn suppresses the occurrence of fractures when welded chips peel off.

In the drilling tool described above, a thinning rake surface of the web thinning may be shaped straight so as to extend from an area around a center of the tool and in a radial direction or a parallel direction thereto in a tool front view.

In the drilling tool described above, a thinning rake surface of the web thinning may be shaped in a helix in an opposite direction to the rotating direction of the tool so as to extend from an area around a center of the tool and in a radial direction in a tool front view.

In the drilling tool described above, a curvature radius of the helix of the thinning rake surface may be constant.

In the drilling tool described above, a curvature radius of the helix of the thinning rake surface may be inconstant.

In the drilling tool described above, the thinning heel surface may be formed along an arc about a predetermined location in a side view as seen perpendicularly to a central axis of the tool in a given direction.

In the drilling tool described above, a curvature radius y of the thinning heel surface may be a value obtained through y = ax + b with respect to a tool diameter x.

In the drilling tool described above, the number of web thinnings may be equal to the number of cutting edges.

In the drilling tool described above, a plurality of web thinnings may be uniformly arranged at regular intervals in a circumferential direction.

In the drilling tool described above, the drilling tool may be a head exchangeable drill comprising a body and a head that is removable with respect to the body, in which the head may be provided with the cutting edge.

In the drilling tool described above, the thinning heel surface of the head may protrude further backward with respect to the rotating direction of the tool than a back metal of the body.

### Brief Description of Drawings

Fig. 1 is a perspective view of an example of a drill in an embodiment of a drilling tool according to the present invention as seen from a leading end side.
Fig. 2 is a tool front view of the drill shown in Fig. 1 as seen from a leading end along a central axis.
Fig. 3 is a side view of the drill shown in Fig. 2 as seen from a direction perpendicular to the central axis.
Fig. 4 is a tool front view of the drill shown in Fig. 2 as seen in a state in which the drill has been rotated clockwise by a predetermined amount.
Fig. 5 is a side view of the drill shown in Fig. 4 as seen from a direction perpendicular to the central axis.
Fig. 6 is a perspective view of an example of a drill in a second embodiment of the present invention as seen from a leading end side.
Fig. 7 is a tool front view of the drill shown in Fig. 6.
Fig. 8 is a side view of the drill shown in Fig. 7 as seen from a direction perpendicular to a central axis.
Fig. 9 is a tool front view of the drill shown in Fig. 7 as seen in a state in which the drill has been rotated clockwise by a predetermined amount.
Fig. 10 is a side view of the drill shown in Fig. 9 as seen from a direction perpendicular to the central axis.
Fig. 11 is a graph describing a relationship between a curvature radius y of a thinning heel surface and a tool diameter x.
Figs. 12A and 12B each show an example shape of a drill in which a thinning heel surface is formed along an arc about a predetermined location.
Figs. 13A to 13D are images which each show a state in which chips are discharged when machining is performed with a drill according to the present invention, where the images are arranged in chronological order.
Figs. 14A to 14D are reference images which each show a state in which chips are discharged when machining is performed with a conventional drill, where the images are arranged in chronological order.

### Detailed Description

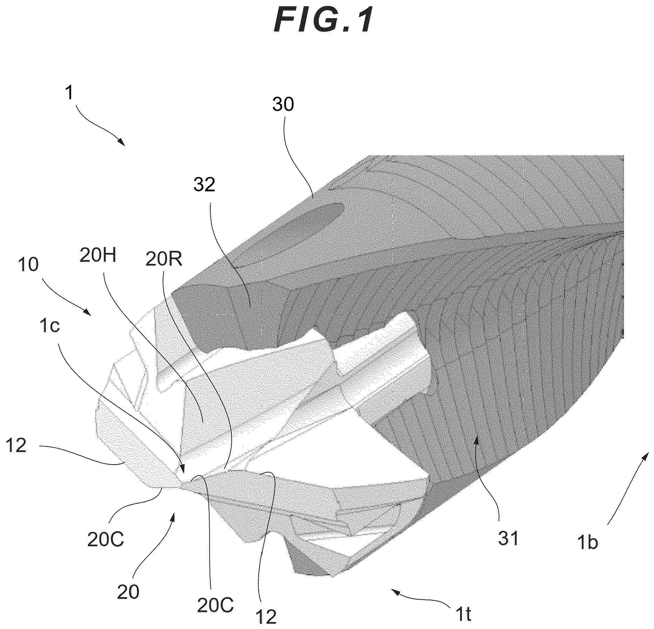

Preferred embodiments of a drilling tool according to the present invention will now be described in detail below, with reference to the attached drawings. A head exchangeable drill to which the present application is applied will be described below (see Fig. 1, etc.).

A head exchangeable drill 1 is a drill that includes: a body 30; and a head that is removable with respect to the body 30 along a central axis 1x, and the head exchangeable drill 1 is configured such that an edge can be replaced through an exchange of a head 10. The head 10 of the head exchangeable drill 1 is provided with two or more cutting edges 12 and a web thinning 20 (see Fig. 1, etc.). The number of web thinnings 20 may be equal to the number of cutting edges 12. It is preferable for a plurality of web thinnings 20 to be uniformly arranged at regular intervals in a circumferential direction of the head 10.

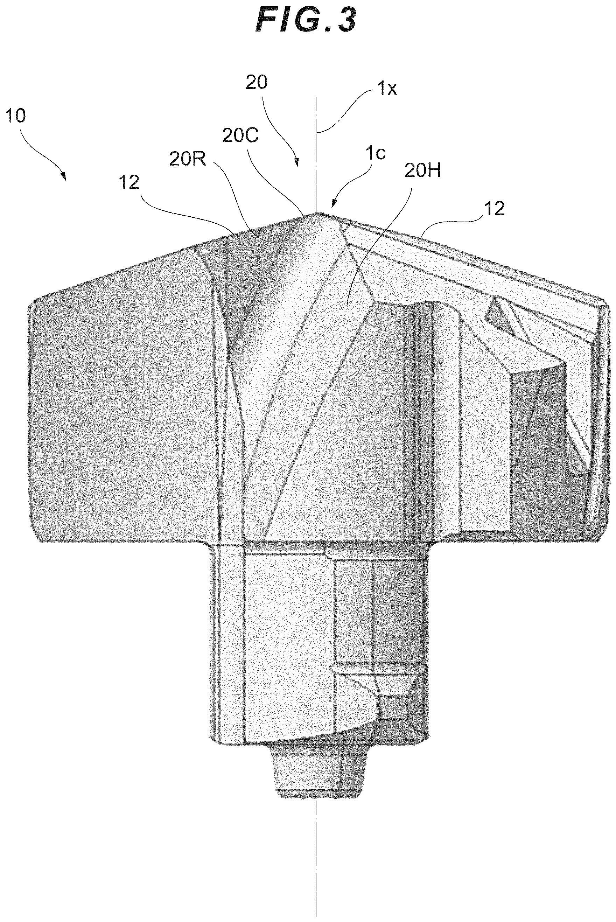

Thinning heel surfaces 20H and thinning rake surfaces 20R are formed in the head 10 in which the web thinning 20 is provided at a leading end 1t of the head exchangeable drill 1 (see Figs. 1 to 5). Each thinning heel surface 20H is a heel-side surface that is formed through providing the web thinning 20 (a surface facing backward in a rotating direction of the head exchangeable drill 1). Thinning cutting edges 20C are each formed on an intersecting line between the thinning rake surface 20R and a flank. Each thinning rake surface 20R is formed so as to be continuous with the thinning cutting edge 20C. An angle formed by each thinning heel surface 20H and the central axis 1x is a thinning angle τ.

### [First Embodiment]

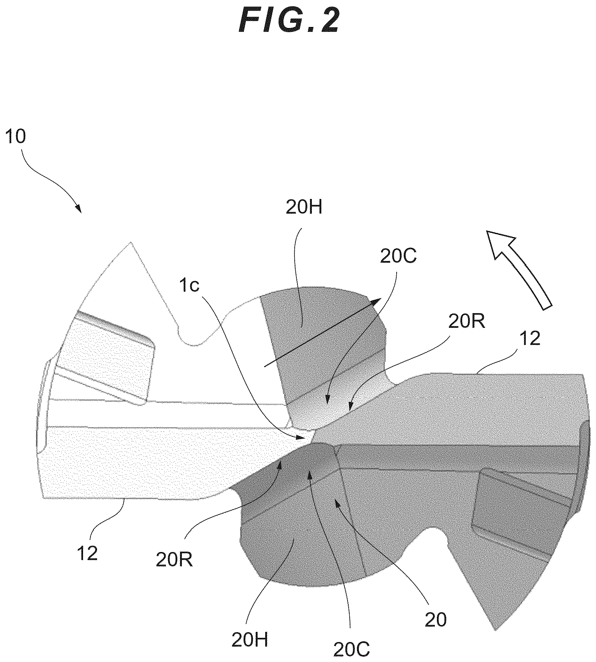

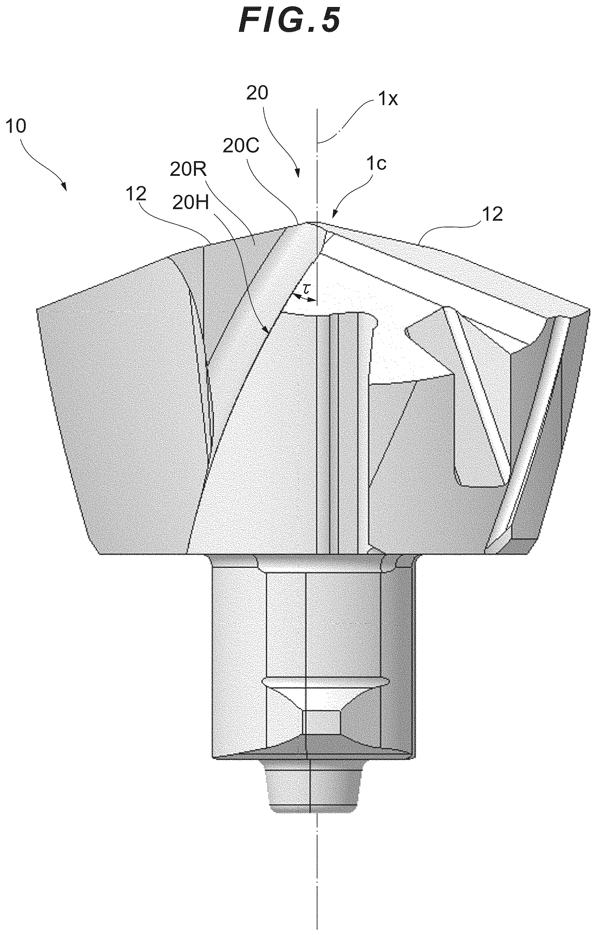

The thinning heel surface 20H in the head 10 of the head exchangeable drill 1 of the present embodiment is formed by a convex surface (see Figs. 2 to 5). This convex surface is formed such that the thinning angle τ gradually becomes smaller as it heads from the leading end 1t of the drill toward a base end 1b thereof (see Fig. 5). In general, in the head exchangeable drill 1, when the thinning angle τ of the drill head 10 becomes excessively more acute in a certain range as it heads from the leading end of the tool to the base end thereof, a back metal 32 of the body 30 of the head exchangeable drill 1 (such back metal refers to a portion of the body 30, and such portion receives, backward with respect to the rotating direction, a cutting force that acts on the drill head 10 through the cutting edge 12; part of this back metal will hereinafter be denoted by reference numeral 32) protrudes further than the thinning heel surface 20H of the web thinning 20, and the discharging of chips may accordingly be blocked. In this regard, the head exchangeable drill 1 of the present embodiment, in which the thinning heel surface 20H is constituted by a convex surface whose thinning angle τ gradually becomes smaller, is structured such that the back metal 32 will not protrude further than the thinning heel surface 20H by having the thinning heel surface 20H protrude further backward than the back metal 32 of the body 30 with respect to the rotating direction of the drill, and this allows the discharging of chips to be restrained from being blocked.

Regarding the head exchangeable drill 1, as in the present embodiment, in which the thinning heel surface 20H is constituted by the convex surface whose thinning angle τ becomes more acute as it heads to the base end 1b of the drill, this head exchangeable drill 1 easily exerts the function of facilitating the discharging of chips by appropriately curling the chips in an area around the thinning cutting edge 20C located on the leading end 1t side of the drill while also smoothly guiding the chips through a curved surface whose angle becomes more acute as it heads to the base end 1b of the drill (i.e., the thinning heel surface 20H) rather than exerting the function of separating chips into small pieces. Such head exchangeable drill 1 shortens a time during which chips remain near the cutting edges 12, easily suppresses the transfer of cutting heat from chips to the edges, and easily suppresses both the welding of chips to the cutting edges 12 and the occurrence of fractures when welded chips peel off. The head exchangeable drill 1 thus configured is particularly suitable for the case of cutting high toughness, difficult-to-machine materials, such as stainless steel.

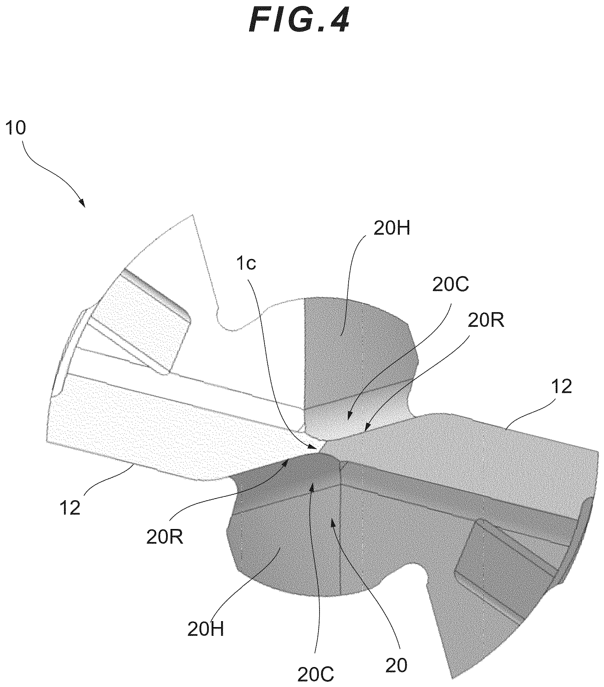

In the head 10 of the head exchangeable drill 1 of the present embodiment, each thinning rake surface 20R is shaped straight so as to extend from an area around a center of the tool and in a radial direction or a parallel direction thereto in a tool front view in which the head exchangeable drill 1 is seen from the leading end 1t of the drill along the central axis 1x (see Figs. 2 and 4).

### [Second Embodiment]

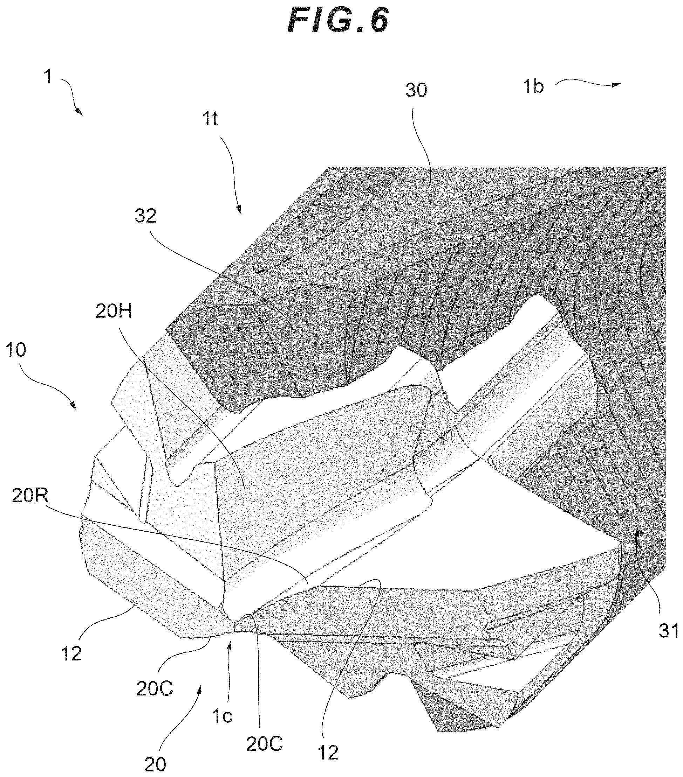

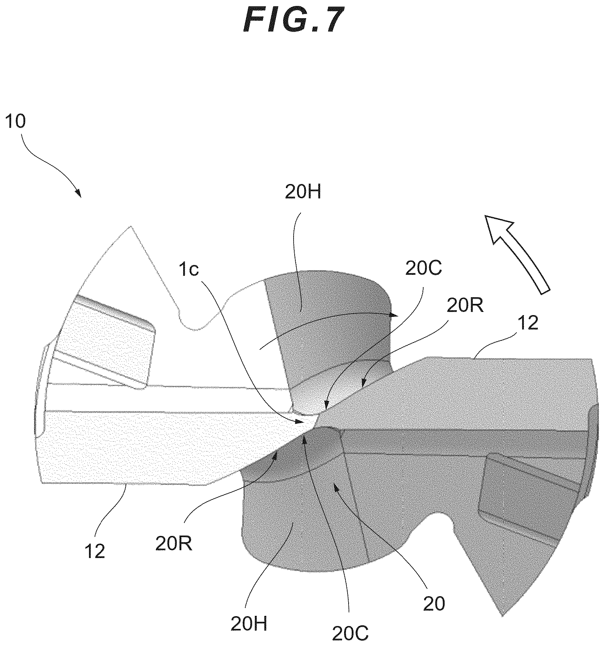

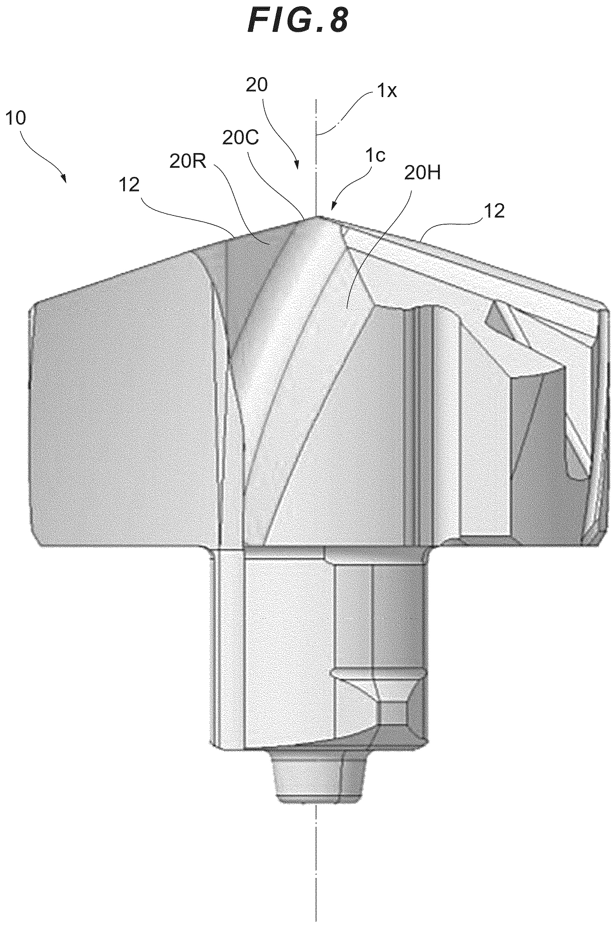

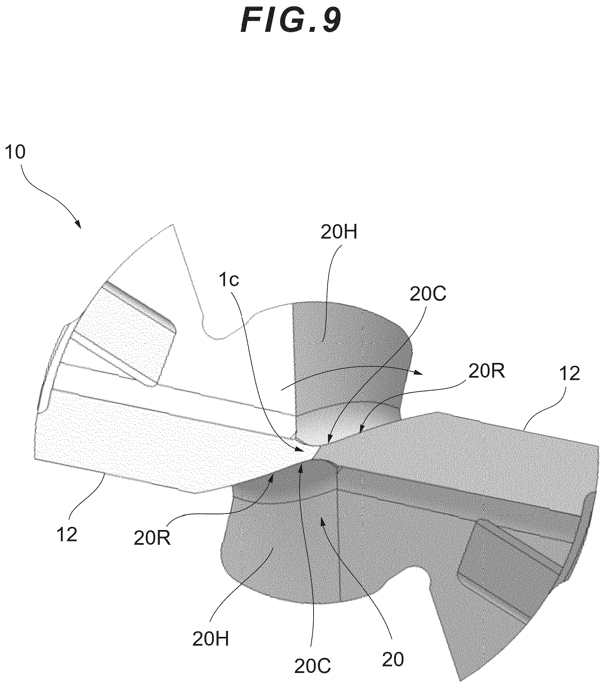

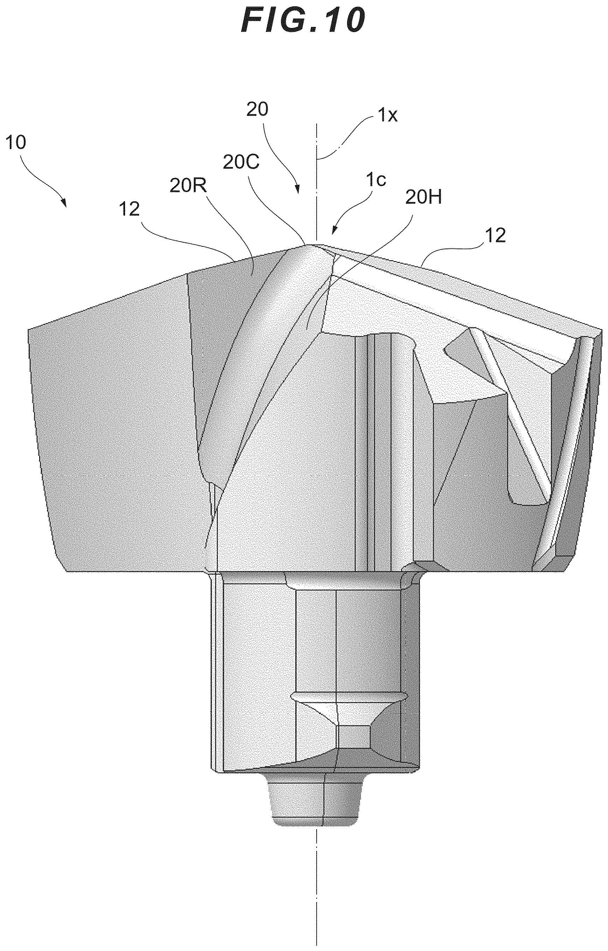

In the head 10 of the head exchangeable drill 1 of the present embodiment, the thinning heel surface 20H is formed such that the thinning angle τ gradually becomes smaller from the leading end 1t of the drill toward the base end 1b thereof, as stated above, and in addition the thinning rake surface 20R is shaped in a helix in an opposite direction to the rotating direction of the drill from an area around a center 1c of the drill and in a radial direction in a tool front view (see Figs. 6 to 10). The web thinning described above allows the function of facilitating the discharging of chips to be easily exerted by appropriately curling the chips in an area around the thinning cutting edge 20C on the leading end 1t side of the drill while also smoothly guiding the chips through a curved surface whose angle becomes more acute as it heads to the base end 1b of the drill (i.e., the thinning heel surface 20H). Such head exchangeable drill 1 shortens a time during which chips remain near the cutting edges 12 and easily suppresses the transfer of cutting heat from chips to the edges. Further, since the thinning rake surface 20R is a curved surface and is shaped so as to be smoothly continuous with a chip discharge groove (flute) 31, compared with the case in which the thinning rake surface 20R is a flat surface, the head exchangeable drill 1 can facilitate a further improvement in the discharging efficiency for chips while preventing the back metal 32 of the body 30 from protruding further than the thinning heel surface 20H (see Fig. 6). In such case, the curvature radius of the helix of the thinning rake surface 20R may be constant or inconstant (see Figs. 7 and 9). Even when the above-described curvature radius is constant, this configuration makes it possible to have the thinning rake surface 20R be smoothly continuous with the chip discharge groove (flute) 31; however, when the above-described curvature radius is inconstant, such as when the thinning rake surface 20R is shaped such that a curvature radius thereof varies at a midpoint thereof, this configuration makes it possible to guide chips more smoothly to the chip discharge groove 31.

### [Third Embodiment]

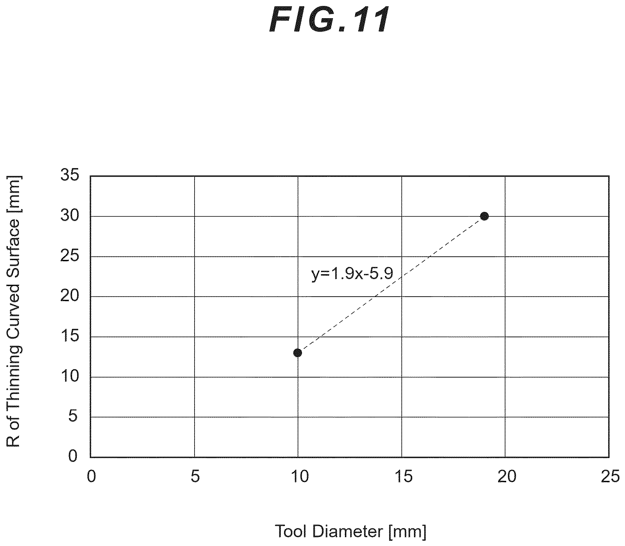

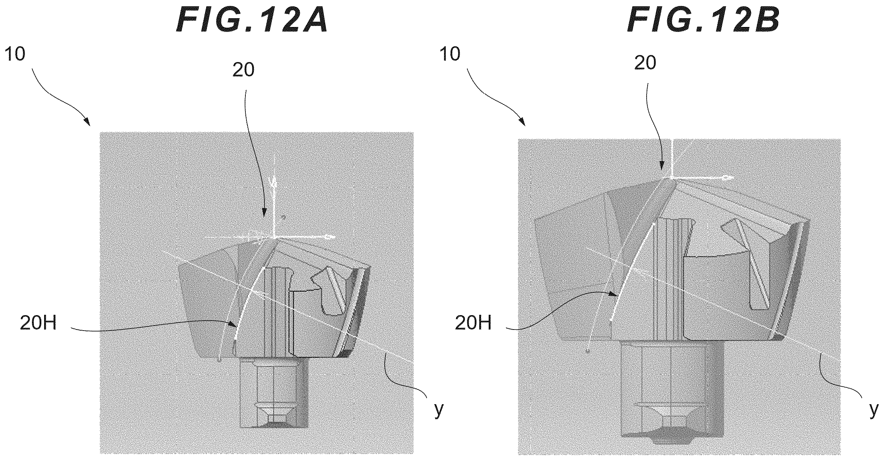

In the above-described head exchangeable drill 1, the thinning heel surface 20H may be formed along an arc about a predetermined location in a side view seen from a direction and seen perpendicularly to the central axis 1x of the head exchangeable drill 1. Specific examples of head exchangeable drills 1 formed as described above will now be described as a third embodiment (see Figs. 11 and 12).

Drill heads 10 of the specific examples of head exchangeable drills 1 in the present embodiment have different sizes; however, in each of such drill heads 10, the thinning heel surfaces 20H are formed along an arc about a predetermined location in a side view (see Figs. 12A and 12B). The drill heads 10 involve tool diameters x and curvature radii y of the thinning heel surfaces 20H, as shown in Table 1. Further, the tool diameters x and the curvature radii y of the thinning heel surfaces 20H of the two drill heads 10 have been plotted on a graph shown in Fig. 11, and this indicates that a curvature radius y of a thinning heel surface 20H has a value that can be obtained through y = ax + b (to be specific, y = 1.9x - 5.9 in the present embodiment) with respect to a tool diameter x.

**[Table 1]**

| | | |
|---|---|---|
| Tool diameter x [mm] | 10 | 19 |
| Curvature radius y of a thinning heel surface [mm] | 13 | 30 |

Although preferred embodiments of the present invention have been described above, the present invention is not limited to the described examples and may be modified in various ways without departing from the spirit of the present invention. For example, although the above-described embodiments each refer to a case in which the present invention is applied to the head exchangeable drill 1, such application of the present invention is merely an example. Needless to say, the present invention is applicable to various drilling tools including solid drills.

### [Examples]

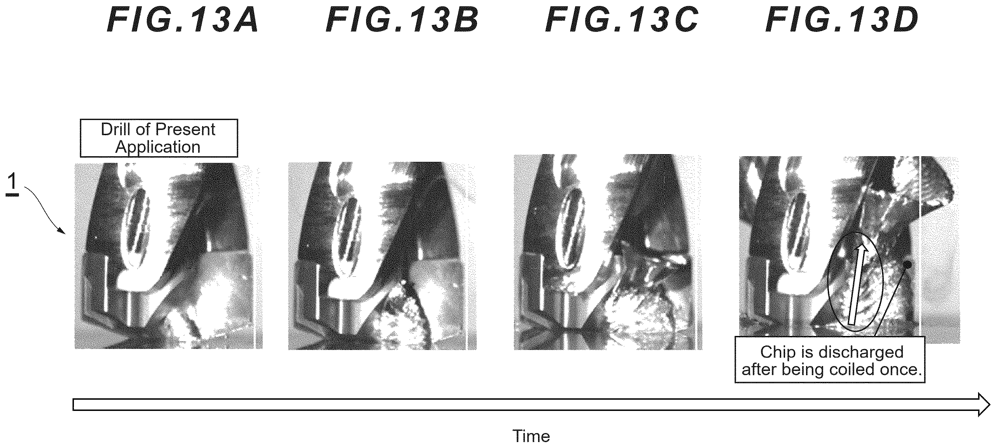

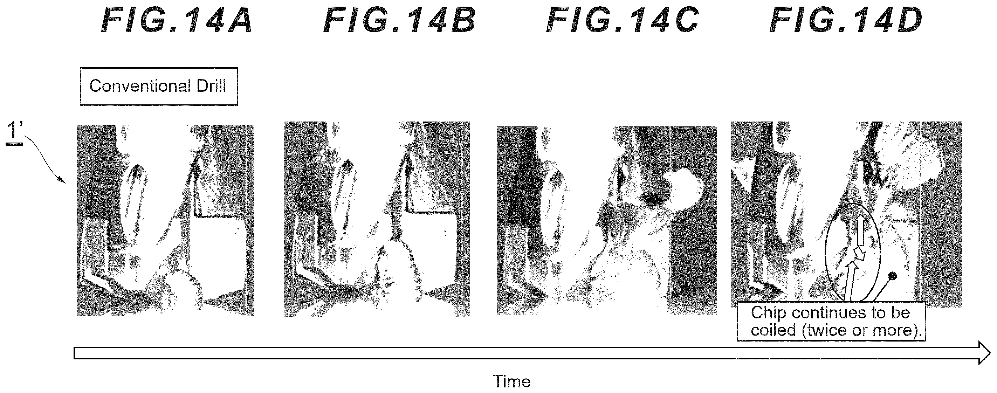

A high-speed camera was used to take images of the discharging of chips when drilling was performed using the head exchangeable drill 1, as in the embodiments described above, and the resulting images were compared with images concerning a conventional drill 1' (see Figs. 13 and 14). When the conventional drill 1' was used, a chip remained near the thinning cutting edge and continued to be coiled until the chip was coiled twice or more (see Fig. 14); meanwhile, when drilling was performed using the head exchangeable drill 1 of the present embodiment, it was confirmed that: a chip was coiled once and then guided to the chip discharge groove 31 without remaining near the thinning cutting edge 20C; and accordingly the chip was curled in a helical shape (see Fig. 13). According to the above results, it has been confirmed that: the head exchangeable drill 1 of the present embodiment involves a reduced degree of restraining chips between the web thinning 20 and the cutting edges 12 compared with a conventional drill; and this leads to reduced loads on the cutting edges 12 and in turn may contribute to suppressing the peeling off of welded chips.

The present invention is suitable for use in a drilling tool, such as a head exchangeable drill.

## Claims

1. A tool for drilling, the tool comprising two or more cutting edges and a web thinning,
wherein a thinning heel surface facing backward in a rotating direction of the tool is formed by a convex surface, and
wherein a thinning angle gradually becomes smaller from a leading end of the tool toward a base end thereof.

2. The drilling tool according to claim 1, wherein a thinning rake surface of the web thinning is shaped straight so as to extend from an area around a center of the tool and in a radial direction or a parallel direction thereto in a tool front view.

3. The drilling tool according to claim 1, wherein a thinning rake surface of the web thinning is shaped in a helix in an opposite direction to the rotating direction of the tool so as to extend from an area around a center of the tool and in a radial direction in a tool front view.

4. The drilling tool according to claim 3, wherein a curvature radius of the helix of the thinning rake surface is constant.

5. The drilling tool according to claim 3, wherein a curvature radius of the helix of the thinning rake surface is inconstant.

6. The drilling tool according to any one of claims 1 to 5, wherein the thinning heel surface is formed along an arc about a predetermined location in a side view as seen perpendicularly to a central axis of the tool in a given direction.

7. The drilling tool according to claim 6, wherein a curvature radius y of the thinning heel surface is a value obtained through y = ax + b with respect to a tool diameter x.

8. The drilling tool according to any one of claims 1 to 5, wherein the number of web thinnings is equal to the number of cutting edges.

9. The drilling tool according to any one of claims 1 to 5, wherein a plurality of web thinnings are uniformly arranged at regular intervals in a circumferential direction.

10. The drilling tool according to any one of claims 1 to 5, wherein the drilling tool is a head exchangeable drill comprising a body and a head that is removable with respect to the body, wherein the head is provided with the cutting edges.

11. The drilling tool according to claim 10, wherein the thinning heel surface of the head protrudes further backward with respect to the rotating direction of the tool than a back metal of the body.
